(19) Europäisches Patentamt
European Patent Office
Office européen des brevets

(11) Publication number: 0 163 229 A2

(12) # EUROPEAN PATENT APPLICATION

(21) Application number: 85106171.3

(22) Date of filing: 20.05.85

(51) Int. Cl.[4]: C 09 K 19/02
C 09 K 19/20, C 09 K 19/30
C 09 K 19/32, C 09 K 19/22
C 09 K 19/12, C 07 C 119/00
C 07 C 69/00

(30) Priority: 23.05.84 JP 102578/84
23.05.84 JP 102579/84

(43) Date of publication of application: 04.12.85 Bulletin 85/49

(84) Designated Contracting States: CH DE FR GB LI NL

(71) Applicant: HITACHI, LTD.
6, Kanda Surugadai 4-chome Chiyoda-ku
Tokyo 100(JP)

(71) Applicant: Chisso Corporation
6-32, Nakanoshima 3-chome Kita-ku
Osaka-shi Osaka-fu(JP)

(72) Inventor: Hattori, Shintaroo
Yuho-ryo, 20-3 Ayukawacho-6-chome
Hitachi-shi(JP)

(72) Inventor: Kondo, Katsumi
19-3-401, Ishinazakacho-1-chome
Hitachi-shi(JP)

(72) Inventor: Kitamura, Teruo
3600-234, Nakane
Katsuta-shi(JP)

(72) Inventor: Hanawa, Yasuo
45-12, Taiseicho
Katsuta-shi(JP)

(72) Inventor: Mukoh, Akio
498-21, Kasaharacho
Mito-shi(JP)

(72) Inventor: Nakata, Tadao
212-123, Koya
Katsuta-shi(JP)

(74) Representative: Strehl, Schübel-Hopf, Schulz
Widenmayerstrasse 17 Postfach 22 03 45
D-8000 München 22(DE)

(54) **Ferroelectric liquid crystal composition.**

(57) A ferroelectric liquid crystal composition comprising two or more liquid crystal compounds showing a cystal phase at a lower temperature side of ferroelectric chiral smectic C phase when cooled, for example, compounds of the formulae: R 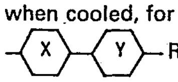 R'; and/or R 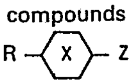 Z 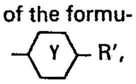 R', wherein R and R' are independently a substituent having a branched or straight-chain alkyl group therein; 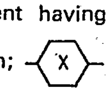 and 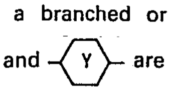 are independently a divalent six-membered ring group; and Z is a divalent linkage group, shows ferroelectric chiral smectic C phase in a broad temperature range including room temperature.

EP 0 163 229 A2

# FERROELECTRIC LIQUID CRYSTAL COMPOSITION

## BACKGROUND OF THE INVENTION

This invention relates to a ferroelectric liquid crystal composition which is particularly suitable for optical switches and display devices, excellent in response properties and shows chiral smectic C phase.

Optical devices using liquid crystals are practically used in various fields. Among liquid crystal display devices, a twisted nematic (TN) effect applying a nematic liquid crystal phase which is a kind of mesophases is used mainly. Such a TN effect is characterized by extremely little consumption of electric power, a device of thin and weight-saved type, and not giving fatigue on eyes even if used for a long period of time because of a light receiving type display. But the TN effect has a problem in that the response time is slow. In order to improve the response time, various studies have been made of liquid crystal materials as well as driving circuits, elements per se, etc., but no remarkable development has been admitted.

In order to retain characteristics of liquid crystal displays of low electric power consumption and light receiving type and to show response properties equivalent to light emitting type displays such as light emitting diodes and electroluminescence, it is necessary to develop a new liquid crystal display system in place of the TN

effect. As one example of such trial, there is proposed a display device applying an optical switching phenomenon of chiral smectic C phase liquid crystal showing ferroelectric properties (hereinafter referred to as "SmC* phase") [e.g. N.A. Clark, S.T. Lagerwall: Appl. Phys. Lett., 36, 899, (1980)]. In order to develop such a display device, it is necessary to solve various problems. Particularly, as to liquid crystal materials, it is essential to develop materials satisfying the following two points:

(1) to exhibit ferroelectric SmC* phase in a wider temperature range than a temperature range including room temperature such as 0 to 60°C, and

(2) to show ferroelectric properties to some extent so as to have spontaneous polarization which can show the above-mentioned optical switching phenomenon at a sufficiently low voltage for practical use.

The SmC* phase liquid crystals showing ferroelectric properties are a kind of smectic liquid crystals and disclosed in detail in an article by S.A. Pikin et al: Usp. Fiz. Nauk, 125, 251 (1978) [Sov. Phys. Usp., 21, 487 (1978)]. The ferroelectric properties are properties appear when liquid crystal materials show the SmC* phase. The term "temperature range showing ferroelectric properties" means a temperature range when the liquid crystal materials show the SmC* phase.

Various liquid crystal compounds showing the SmC* phase are disclosed, for example, in Ph. Martinot-Lagarde: J. Physique, 37 C-3, 129 (1976) and A. Hallsby

et al: Mol. Cryst. Liq. Cryst., 82, 61 (1982). But the temperature range showing the SmC* phase (hereinafter referred to as "MR") is narrow and placed at a higher temperature side than room temperature, and thus not practically usable.

In order to widen the MR, there have been tried to mix homologues of liquid crystal compounds having different lengths of terminal groups, and to mix one or more optically active substances or cholesteric liquid crystals therewith. But the MR was not able to be broadened and not lowered below room temperature.

## SUMMARY OF THE INVENTION

It is an object of this invention to provide a ferroelectric liquid crystal composition having the SmC* phase in a wide temperature range.

It is another object of this invention to provide a ferroelectric liquid crystal composition having a crystal phase (hereinafter referred to as "C phase") at a lower temperature side of the SmC* phase.

It is a further object of this invention to provide a ferroelectric liquid crystal composition having at least 0.5 $nC/cm^2$ of spontaneous polarization at a temperature 10°C lower than the upper limit temperature of the SmC* phase. Other objects will become clear from the disclosure mentioned below.

## BRIEF DESCRIPTION OF THE DRAWINGS

Figs. 1 to 4 and 7 to 9 are graphs showing phase transition temperatures of ferroelectric liquid crystal compositions according to this invention.

Figs. 5, 6, 10 and 11 are graphs showing phase transition temperatures of liquid crystal compositions of Comparative Examples.

Fig. 12 is a graph showing response properties of a display device including one example of the liquid crystal composition of this invention.

## DESCRIPTION OF THE PREFERRED EMBODIMENTS

A material which can cover the temperature range necessary for practical use with a single liquid crystal has not been found in nematic liquid crystals, so that it cannot be expected to find out such a material in the field of ferroelectric liquid crystals. Then, the present inventors have studied to mix two or more liquid crystal compounds to expand the temperature range of showing liquid crystals by applying the melting point drop phenomenon in the field of ferroelectric liquid crystals and accomplished this invention.

A first aspect of this invention is to provide the ferroelectric liquid crystal composition mentioned below. Characteristics of the SmC* phase of ferroelectric liquid crystal composition for practical use are that the molecules are parallel to each other with inclination to a certain direction, and the direction of inclination shifts

gradually between a layer and a layer so as to maintain a helical structure as a whole. Under such a molecular arrangement, there takes place spontaneous polarization due to an obstacle to intramolecular free rotation caused by thermal motion of intramolecular polarization groups around the long axis of liquid crystal molecule caused by mutual actions of neighboring molecules. The spontaneous polarization is directed perpendicular to the helical axis of molecular arrangement (parallel to the smectic layer).

After detailed study with various experiments so as to bring about such a molecular arrangement and spontaneous polarization on a mixed composition in a wide temperature range including room temperature, it was found that components to be admixed should contain at least one component which is a compound showing the SmC* phase in order to make the composition show the SmC* phase.

Further, when molecules showing a liquid crystal phase with molecular arrangement near crystals (e.g. a smectic H phase) are entered among liquid crystal molecules arranged helically, the mutual actions between liquid crystal molecules are weakened so as to make the free rotation of polarization groups in the liquid crystal molecules easier. As a result, the spontaneous polarization of the composition becomes small so as to narrow the MR showing the ferroelectric liquid crystal phase. Therefore, in order to expand the MR of the composition, it is desirable that the composition contains two or more liqid crystal

compounds showing the SmC* phase. In such a case, it is preferable to select the mixing ratio of two or more liquid crystal compounds so as to make the phase transition temperature from the crystal phase to the liquid crystal phase the lowest, which results in broadening the MR including room temperature.

A second aspect of this invention is based on the finding that, in the case of using as components for the composition compounds having a liquid crystal phase such as a smectic B phase and smectic H phase at a lower temperature side of the SmC* phase at the time of cooling, the lower limit temperature of SmC* phase (MR lower limit temperature) of the composition is not lowered below the lowest MR lower limit temperature of a component of the composition. Further, when at least one compound having a crystal phase (C phase) at a lower temperature side of the SmC* phase when cooled is included as a component in the composition, a phenomenon similar to the melting point depression takes place to greatly lower the MR lower limit temperature and to broaden the range so as to include room temperature.

In such a case, when the composition contains two or more compounds having only a crystal phase at a lower temperature side the SmC* phase when cooled, the MR enlarging effect becomes more remarkable.

A third aspect of this invention is based on the finding that when a ferroelectric liquid crystal composition is used in a display device, properties for making driving possible under conditions for practical use can be

obtained by making spontaneous polarization 0.5 $nC/cm^2$ or more, more preferably 2 $nC/cm^2$ or more, at a temperature 10°C lower than the upper limit temperature of the SmC* phase.

Liquid crystal compounds usable in the composition of this invention can be represented by the formula:

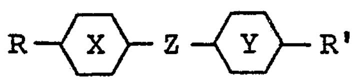 (1), or

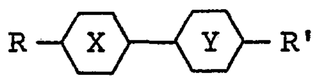 (2)

wherein R and R' are independently a substituent containing therein a branched or straight-chain alkyl group; 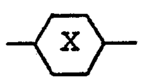 and 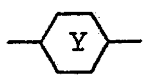 are independently a divalent six-membered ring group; and Z is a divalent linkage group.

Preferable examples of R and R' are an alkoxy group preferably having 5 to 12 carbon atoms, an acyloxy group preferably having 5 to 12 carbon atoms, an acyl group preferably having 5 to 12 carbon atoms, an alkoxycarbonyl group preferably having 5 to 12 carbon atoms, and an alkyl group preferably having 5 to 12 carbon atoms. It is more preferable that at least one of R and R' is an alkoxycarbonyl group containing an asymmetric carbon atom therein.

Preferable examples of the divalent six-membered ring group of 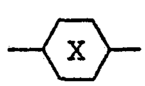 and 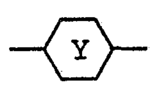 are those selected from rings such as benzene, cyclohexane, biphenyl, phenylcyclohexane and naphthalene.

Preferable examples of Z are a divalent group such as an ester group, a Schiff's base group, an oxymethylene group and an ethylene group.

Concrete examples of the liquid crystal compounds represented by the formulae (1) and (2) are as follows:

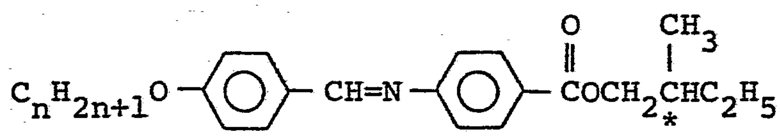

(3)

wherein the mark * indicates the asymmetric carbon atom; and n is a positive integer of 7 to 12.

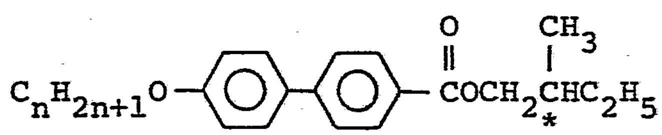

(4)

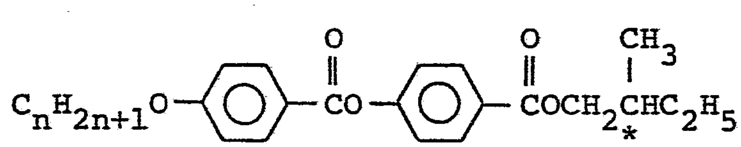

(5)

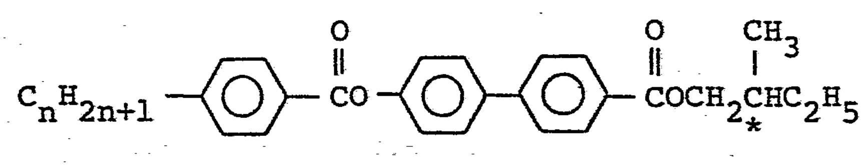

(6)

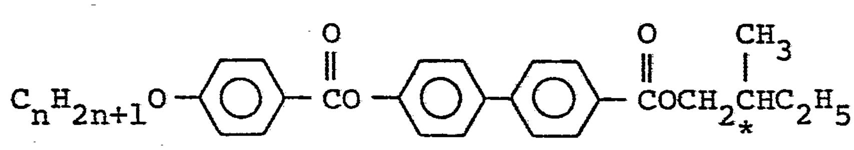

(7)

The ferroelectric liquid crystal composition of this invention comprises two or more ferroelectric liquid crystal compounds having different fundamental skeltons. Examples of such compositions are a composition comprising

at least one ferroelectric liquid crystal having a fundamental skelton of biphenyl (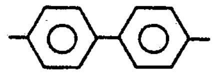) and at least one ferroelectric liquid crystal having a fundamental skelton of benzylideneaniline (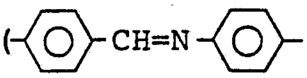); a composition comprising at least one ferroelectric liquid crystal having a fundamental sketon of biphenyl (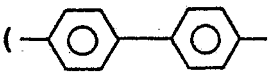) and at least one ferroelectric liquid crystal having a fundamental skelton of benzoic acid phenyl ester (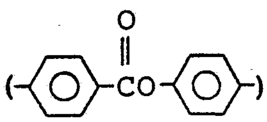); a composition comprising at least one ferroelectric liquid crystal having a fundamental skelton of biphenyl (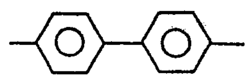) and at least one ferroelectric liquid crystal having a fundamental skelton of benzoic acid biphenyl ester (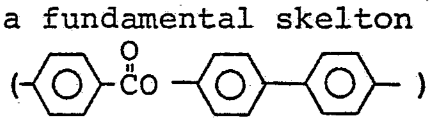); a composition comprising at least one ferroelectric liquid crystal having a fundamental skelton of biphenyl (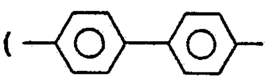) and at least one ferroelectric liquid crystal having a fundamental skelton of phenyl benzoic acid phenyl ester (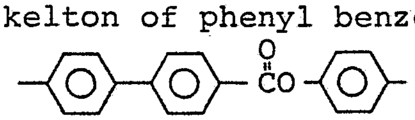); a composition comprising at least one ferroelectric liquid crystal having a fundamental skelton of benzoic acid phenyl ester (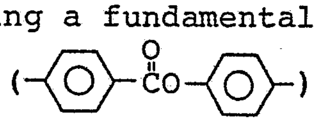) and at least one ferroelectric liquid crystal having a fundamental skelton of phenyl benzoic acid phenyl ester (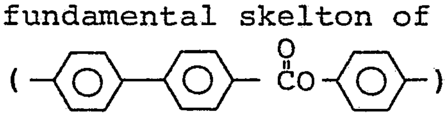); a composition comprising at least one ferroelectric liquid crystal having a fundamental skelton of benzoic acid phenyl ester (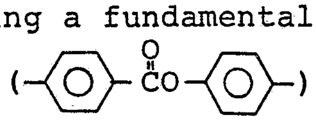) and at least one ferroelectric liquid crystal having a fundamental skelton of benzoic acid biphenyl ester

( 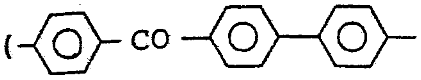 ), etc.

In the above-mentioned compositions, there is no particular limit to the proportions of individual components, but it is preferable that individual components are mixed in amounts of 10% by mole or more, respectively, and it is more preferable that individual components form a entectic mixture. Needless to say, these compositions may contain three or four or more constituents.

The liquid crystal composition of this invention may further comprise one or more third components and other compounds having different fundamental skeltons, so long as these compounds have the C phase at a lower temperature side of the SmC* phase when cooled.

These liquid crystal compounds having ferroelectric properties can be synthesized as follows.

(A) The compound of the formula (3) wherein n = 10 can be produced as follows.

A mixed solution of 51 g of (-)2-methylbutyl alcohol and 200 ml of pyridine is ice-cooled and p-nitrobenzoic acid halide is added thereto with stirring for 30 minutes, followed by heating with stirring on a boiling water bath for 5 hours. After cooling to room temperature, 400 ml of water and 200 ml of toluene are added to the resulting solution for separating into an oil layer and an aqueous layer. The oil layer is washed with 6N HCl, 2N NaOH and water, in this order and distilled under reduced pressure to give a yellow oil having a boiling point of 134 - 137°C (4 mmHg) in an amount of 97.5 g. The resulting

compound is 2-methylbutyl p-nitrobenzoate.

The resulting nitro compound is reduced with hydrogen in 260 ml of ethanol in the presence of 6 g of 5% Pd/C catalyst at normal temperatures and normal pressure. The catalyst is filtered off and the ethanol is removed by distillation. The resulting crystals are recrystallized from a mixed solvent of 200 ml of heptane and 100 ml of benzene to yield 85 g of crystals having a melting point of 44-45°C. The resulting crystals are identified as (+)2-methylbutyl p-aminobenzoate having a specific rotatory power $[\alpha]_D^{23}$ of +7.30 measured by using 20% toluene solution.

Another starting material, p-n-decyloxybenzaldehyde, can be synthesized as follows. A mixture of 84 g of p-hydroxybenzaldehyde, 400 ml of ethanol, 48 g of potassium hydroxide and 170 g of n-decyl bromide is heated under reflux for 5 hours with stirring. Then almost ethanol is removed by distillation and toluene and water are added for separation. The resulting organic layer is washed with 2N NaOH and water, in this order, followed by distillation under reduced pressure to give the desired compound having a boiling point of 157-159°C (3 mmHg) in yield of 127 g.

Then, 8 g of (+)2-methylbutyl p-aminobenzoate, 10 g of p-n-decyloxybenzaldehyde, 20 mg of p-toluenesulfonic acid and 150 ml of toluene are boiled in a flask equipped with a Diene-Stark reflux condenser, while removing water produced. After cooled to room temperature, the

resulting reaction solution is washed with 2N NaOH and water, followed by removal of toluene by distillation under reduced pressure. The resulting residue is recrystallized twice from ethanol to give 11 g of p-n-decyloxybenzylidene-p'-(2-methylbutyloxycarbonyl)aniline.

The final product is identified as p-n-decyloxybenzylidene-p'-(2-methylbutyloxycarbonyl)aniline by elementary analysis, mass spectrum and infrared absorption spectrum. That is, the elementary analysis values (C: 77.09%, H: 9.18%, and N: 3.08%) are in good agreement with the theoretical values for $C_{29}H_{41}NO_3$ (C: 77.13%, H: 9.15%, and N: 3.10%). In the mass spectrum, there appears a molecular ion peak at m/e = 451. In the infrared absorption spectrum, there are absorptions at 1710 $cm^{-1}$ and 1255 $cm^{-1}$ due to the ester linkage and at 1610 $cm^{-1}$ due to the Schiff linkage. Considering the starting materials and the above-mentioned data, the final product can be identified as p-n-decyloxybenzylidene-p'-(2-methylbutyloxycarbonyl)aniline.

(B) The compound of the formula (4) can be produced as follows.

4-Alkyloxy-4'-biphenylcarboxylic acid is reacted with a halogenating agent such as thionyl chloride or phosphorus pentachloride to give an acid halide, which is reacted with an optically active alcohol in a basic solvent such as pyridine. It is also possible to use other conventional esterification processes.

(C) The compound of the formula (5) can be produced as

follows.

An optically active group-containing ester of p-hydroxybenzoic acid is reacted with an acid halide of corresponding p-alkoxybenzoic acid, 4-alkyl-4'-biphenylcarboxylic acid, 4-alkoxy-4'-biphenylcarboxylic acid, or the like, in a basic solvent such as pyridine.

(D) The compounds of the formulae (6) and (7) can be produced as follows.

An optically active group-containing ester of 4-hydroxy-4'-biphenylcarboxylic acid is reacted with an acid halide of p-alkylbenzoic acid or p-alkoxybenzoic acid in a basic solvent such as pyridine.

The optically active group-containing ester of p-hydroxybenzoic acid or 4-hydroxy-4'-biphenylcarboxylic acid can be synthesized by reacting such a hydroxycarboxylic acid with an optically active group-containing alcohol using a mineral acid such as sulfuric acid as a catalyst, or by alcoholysis in the presence of an acid catalyst using p-hydroxybenzonitrile and an optically active group-containing alcohol of 4-hydroxy-4'-cyanobiphenyl.

This invention is illustrated by way of the following Examples, wherein phase transition temperatures may vary slightly depending on the purity of liquid crystals and messuring methods. In the following Examples and Figs. 1 to 11, the following symbols are used:

C: crystal phase

SmC*: chiral smectic C phase

SmA: smectic A phase

Sm*H: chiral smectic H phase

Ch: cholesteric phase

I: liquid phase

Ps: spontaneous polarization (the value at 10°C lower than the upper limit temperature of the SmC*)

Example 1

p-n-Octyloxybenzylidene-p'-(2-methylbutyloxycarbonyl)aniline of the formula:

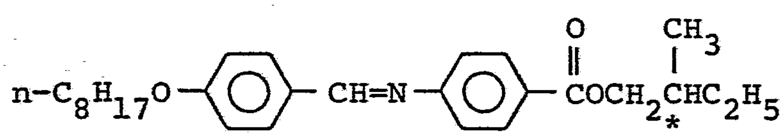

(8)

$$Ps = 5.1\ nC/cm^2$$

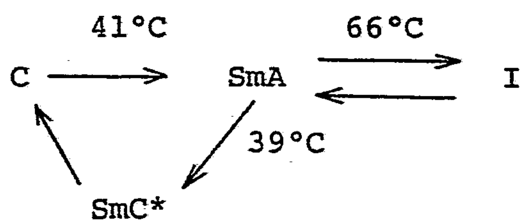


4-n-Octyloxy-4'-biphenylcarboxylic acid-2-methylbutyl ester of the formula:

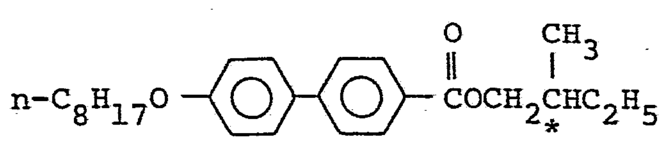

(9)

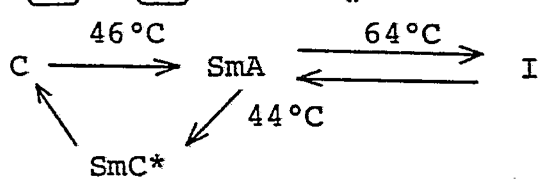

A ferroelectric liquid crystal composition comprising the compounds of the formulae (8) and (9) was prepared with various mixing ratios, and the phase transition temperatures of the composition were measured and shown in Fig. 1. In Fig. 1, the molar ratio of the compound of the formula (9) is taken along the abscissae axis.

As is clear from Fig. 1, by mixing the compounds of the formulae (8) and (9) which show the C phase below the SmC* phase when cooled, the MR can be broadened to near room temperature.

Example 2

p-(2-Methylbutoxycarbonyl)-benzylidene-p'-n-octyloxyaniline of the formula:

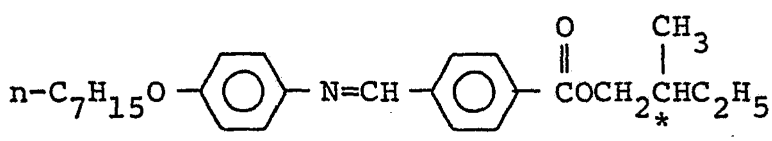 (10)

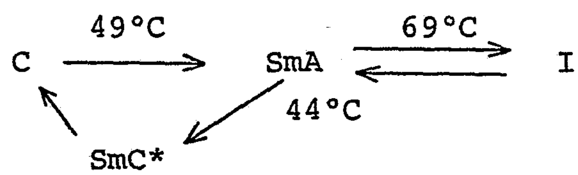


A ferroelectric liquid crystal composition comprising the compound of the formula (9) used in Example 1 and the compound of the formula (10) was prepared with various mixing ratios, and the phase transition temperatures of the composition were measured and shown in Fig. 2. In Fig. 2, the molar ratio of the compound of the formula (9)

is taken along the abscissae axis.

As is clear from Fig. 2, by mixing the compounds of the formulae (9) and (10) which show the C phase below the SmC* phase when cooled, the MR can be broadened to near room temperature.

Example 3

An equimolar mixture of the compounds of the formulae (8) and (9) used in Example 1:

$$\mathrm{C} \overset{20°\mathrm{C}}{\rightleftarrows} \mathrm{SmC^*} \overset{34°\mathrm{C}}{\rightleftarrows} \mathrm{SmA} \overset{63°\mathrm{C}}{\rightleftarrows} \mathrm{I}$$

4'-(2-methylbutoxycarbonyl)-4-biphenyl p-n-octylbenzoate of the formula:

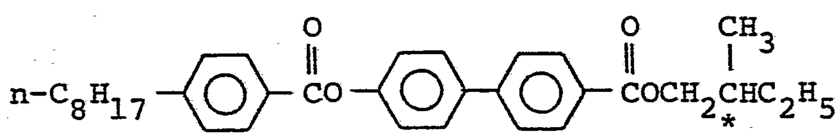 (11)

$$\mathrm{C} \overset{57°\mathrm{C}}{\rightleftarrows} \mathrm{SmC^*} \overset{89°\mathrm{C}}{\rightleftarrows} \mathrm{SmA} \overset{134°\mathrm{C}}{\rightleftarrows} \mathrm{Ch} \overset{140°\mathrm{C}}{\rightleftarrows} \mathrm{I}$$

A ferroelectric liquid crystal composition comprising an equimolar mixture of the compounds of the formulae (8) and (9) and the compound of the formula (11) was prepared with various mixing ratios, and the phase transition temperatures of the composition were measured and shown in Fig. 3. In Fig. 3, the molar ratio of the compound of the formula (11) is taken along the abscissae axis.

As is clear from Fig. 3, by mixing the compound of the formula (11) which shows the C phase below the

SmC* phase when cooled, the MR can be broadened to a range including room temperature.

Example 4

An equimolar mixture of the compounds of the formulae (8) and (9) used in Example 3.

4'-(2-methylbutoxycarbonyl)-4-biphenyl p-n-heptyloxybenzoate of the forkula:

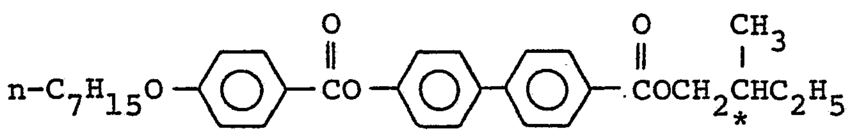

(12)

$$C \underset{}{\overset{69°C}{\rightleftarrows}} SmC^* \underset{}{\overset{121°C}{\rightleftarrows}} SmA \underset{}{\overset{165°C}{\rightleftarrows}} Ch \underset{}{\overset{171°C}{\rightleftarrows}} I$$

A ferroelectric liquid crystal composition comprising an equimolar mixture of the compounds of the formulae (8) and (9) and the compound of the formula (12) was prepared with various mixing ratios, and the phase transition temperatures of the composition were measured and shown in Fig. 4. In Fig. 4, the molar ratio of the compound of the formula (12) is taken along the abscissae axis.

As is clear from Fig. 4, by mixing the compound of the formula (12) which shows the C phase below the SmC* phase when cooled, the MR can be broadened to a range including room temperature.

Comparative Example 1

p-n-Dodecyloxybenzylideneamino-2-methylbutyl-

cinnamic acid ester of the formula:

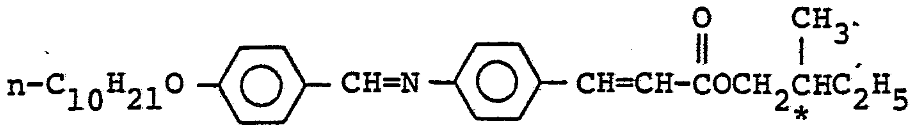

(13)

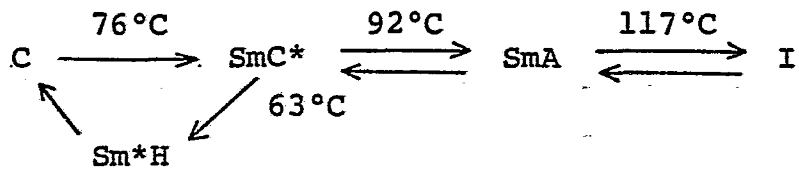


p-n-Hexyloxybenzylideneamino-2-methylbutylcinnamic acid ester of the formula:

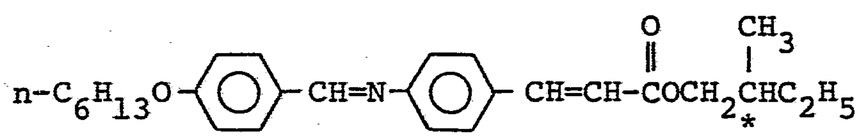

(14)

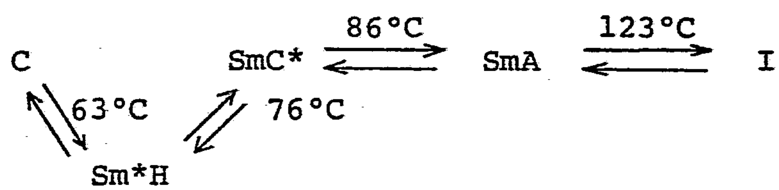


A ferroelectric liquid crystal composition comprising the compounds of the formulae (13) and (14) was prepared with various mixing ratios, and the phase transition temperatures of the composition were measured and shown in Fig. 5. In Fig. 5, the molar ratio of the compound of the formula (14) is taken along the abscissae axis.

As is clear from Fig. 5, when the compounds of the formulae (13) and (14) which show the liquid crystal phase different from the C phase below the SmC* phase when cooled are used, the MR is not broadened beyond the broadest MR

of a component in the composition and the MR lower limit temperature is not lowered beyond the lowest MR lower limit temperature of a component in the composition.

Comparative Example 2

The compound of the formula (13) used in Comparative Example 1.

p-n-Heptyloxybenzylideneamino-2-methylbutylcinnamic acid ester of the formula:

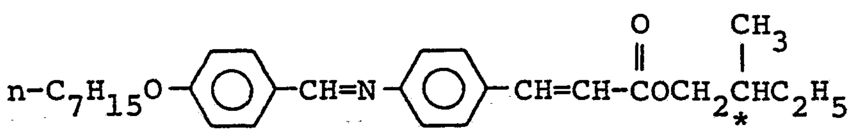

(15)

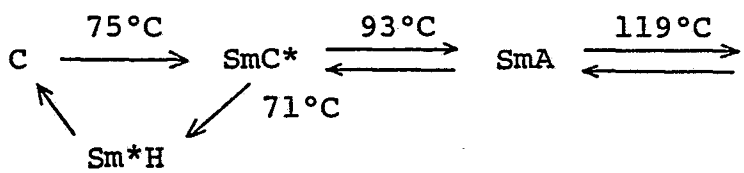


A ferroelectric liquid crystal composition comprising the compounds of the formulae (13) and (15) was prepared with various mixing ratios, and the phase transition temperatures of the composition were measured and shown in Fig. 6. In Fig. 6, the molar ratio of the compound of the formula (15) is taken along the abscissae axis.

As is clear from Fig. 6, when the compounds of the formulae (13) and (15) which show the liquid crystal phase different from the C phase below the SmC* phase when cooled are used, the MR is not broadened beyond the broadest MR of a component in the composition and the MR lower limit temperature is not lowered beyond the lowest MR lower limit

temperature of a component in the composition.

Example 5

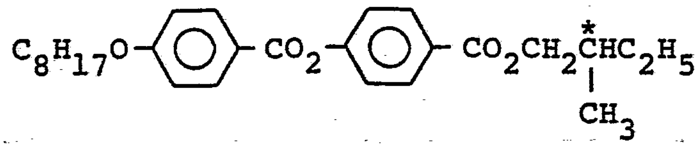

(16)

Ps = 4.5 $nC/cm^2$

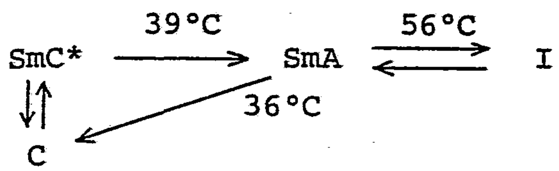


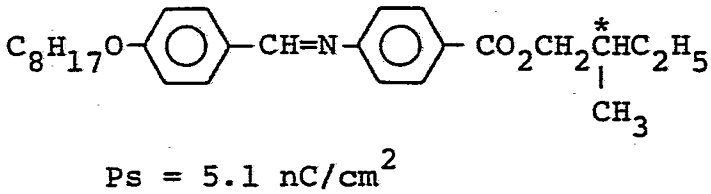

(17)

Ps = 5.1 $nC/cm^2$

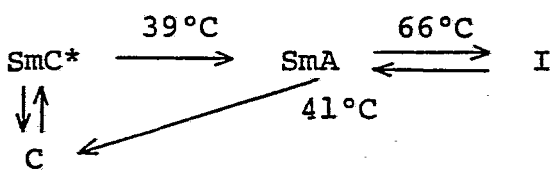


A ferroelectric liquid crystal composition comprising the compounds of the formulae (16) and (17) was prepared with various mixing ratios, and the phase transition temperatures of the composition were measured and shown in Fig. 7. In Fig. 7, the molar ratio of the compound of the formula (16) is taken along the abscissae axis.

As is clear from Fig. 7, although monotropic SmC* liquid crystals when used alone are used, the MR is broadened rapidly by mixing the compounds of the formulae

(16) and (17). The broadest MR is shown at the proportion of the compound of the formula (16) being about 47% by mole with the SmC* phase range of 9 to 32°C.

Example 6

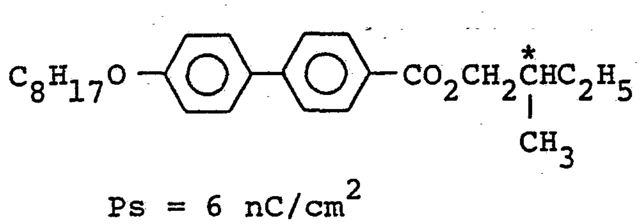

(18)

Ps = 6 $nC/cm^2$

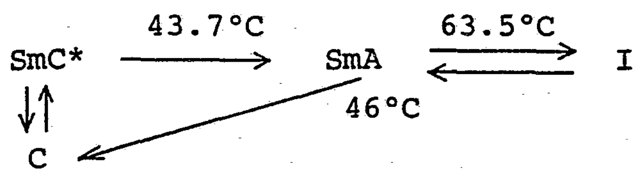


A ferroelectric liquid crystal composition comprising the compounds of the formulae (17) and (18) was prepared with various mixing ratios, and the phase transition temperatures of the composition were measured and shown in Fig. 8. In Fig. 8, the molar ratio of the compound of the formula (17) is taken along the abscissae axis.

As is clear from Fig. 8, the broadest MR is shown at the proportion of the compound of the formula (17) being 47% by mole with the SmC* phase range of 20 to 38°C.

Example 7

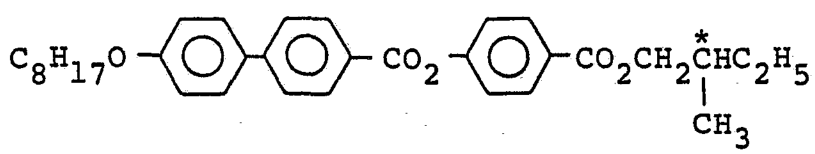

(19)

Ps = 3.5 $nC/cm^2$

$$C \underset{}{\overset{66.5°C}{\rightleftarrows}} SmC^* \overset{143°C}{\rightleftarrows} SmA \overset{181°C}{\rightleftarrows} I$$

A ferroelectric liquid crystal composition comprising the compounds of the formulae (18) and (19) was prepared with various mixing ratios, and the phase transition temperatures of the composition were measured and shown in Fig. 9. In Fig. 9, the molar ratio of the compound of the formula (19) is taken along the abscissae axis.

As is clear from Fig. 9, the MR of SmC* phase showed the range of 15 to 88°C at the equimolar mixture of the compounds of the formulae (18) and (19).

Example 8

A ferroelectric liquid crystal composition was prepared by mixing equimolar amounts of the compound of the formula (17) used in Example 5 and the compound of the formula (19) used in Example 7. The MR of SmC* phase showed the range of 22 to 80°C.

Example 9

A ferroelectric liquid crystal composition was prepared by mixing 65% by mole of the compound of the formula (16) used in Example 5 and 35% by mole of the compound of the formula (19) used in Example 7. The MR of SmC* phase showed the range of 24 to 70°C.

Comparative Example 3

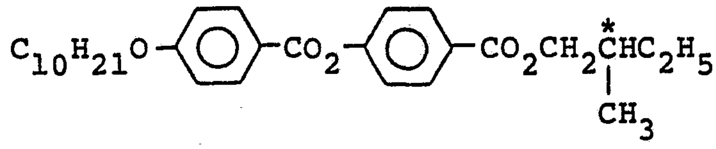

(20)

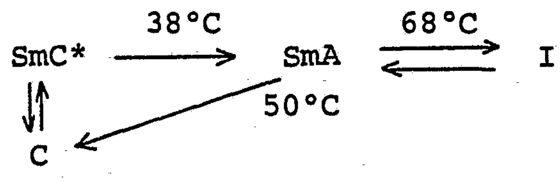


A liquid crystal composition comprising the compound of the formula (16) and the compound of the formula (20) was prepared with various mixing ratios, and the phase transition temperatures of the composition were measured and shown in Fig. 10. In Fig. 10, the proportion of the compound of the formula (20) is taken along the abscissae axis.

As is clear from Fig. 10, the SmC* phase is monotropic even if the mixing ratio is changed and not different from the state of the compounds of the formulae (16) and (20) alone. That is, no enantiotropic SmC* phase which is necessary for practical use is obtained in this composition.

Comparative Example 4

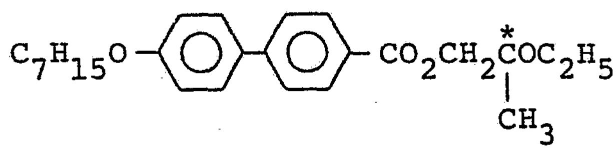

(21)

$$C \overset{40°C}{\rightleftarrows} SmC^* \overset{43°C}{\rightleftarrows} SmA \overset{64°C}{\rightleftarrows} I$$

A liquid crystal composition comprising the compound of the formula (18) and the compound of the formula (21) was prepared with various mixing ratios, and the phase transition temperatures of the composition were measured and shown in Fig. 11. In Fig. 11, the proportion of the compound of the formula (21) is taken along the abscissae axis.

In this composition, the SmC* phase of the compound of the formula (18) is monotropic and that of the compound of the formula (21) is enantiotropic. Although one component is enantiotropic, since the degree of temperature depression of the SmC* phase of the composition is small, the broadest MR is only in the range of 37 to 43°C. This is almost the same as the MR (40 - 43°C) of the single compound of the formula (21).

Comparative Example 5

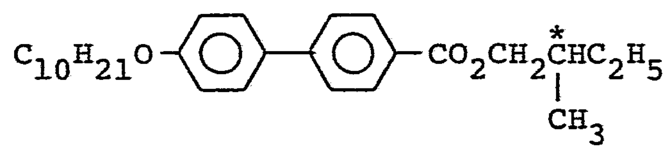

(22)

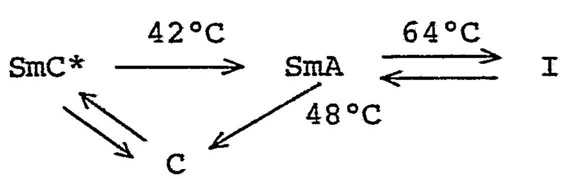


A liquid crystal composition comprising the compound of the formula (18) and the compound of the formula (22) was prepared.

The broadest MR of the composition is 38 to 41°C.

Comparative Example 6

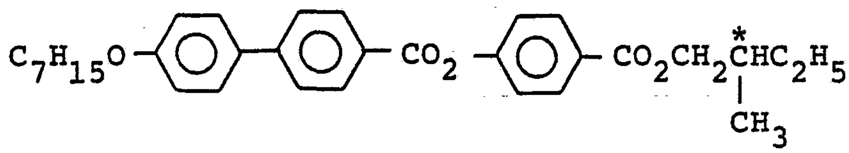

(23)

$$C \underset{}{\overset{65°C}{\rightleftarrows}} SmC^* \underset{}{\overset{138°C}{\rightleftarrows}} SmA \underset{}{\overset{192°C}{\rightleftarrows}} I$$

A liquid crystal composition was prepared by mixing the compound of the formula (19) and the compound of the formula (23).

The broadest MR of the composition is 63 to 141°C.

Application Example

A liquid crystal display device was prepared by using the ferroelectric liquid crystal composition comprising an equimolar mixture of the compounds of the formulae (8) and (9) obtained in Example 1 in a liquid crystal layer and its response properties were evaluated. The liquid crystal display device was produced by forming an orientation film of a polyimide on a glass substrate having an indium oxide transparent electrode thereon, rubbing the orientation film at a certain direction using a piece of gauze, placing a pair of substrates thus treated oppositely so as to make the rubbing direction parallel, placing glass fiber between the substrates as a spacer, and encapsulating the liquid crystal composition in the space thus produced in vacuum to give the display device having a substrate distance of 5.5 μm. The liquid crystal display

element was placed between two polarizers crossed at right angles. Change of intensity of transmitting light when an electric field was applied was measured. Fig. 12 is a graph showing a response wave when measured at 25°C. In Fig. 12, the applied voltage (V) and the intensity of transmitted light (optional scale) are taken along the ordinate axis and the time (msec) is taken along the abscissae axis.

As is clear from Fig. 12, the response time is as short as 1 msec; this means that the liquid crystal display element has excellent high-speed responsibility.

As mentioned above, the ferroelectric liquid crystal composition of this invention shows ferroelectric chiral smectic C phase in a broad temperature range including room temperature. Further, by using such a liquid crystal composition, there can be provided display elements excellent in high-speed responsibility.

0163229

WHAT IS CLAIMED IS:

1. A ferroelectric liquid crystal composition comprising two or more liquid crystal compounds showing a crystal phase at a lower temperature side of ferroelectric chiral smectic C phase when cooled.

2. A composition according to Claim 1, wherein the liquid crystal compound having a crystal phase at a lower temperature side of ferroelectric chiral smectic C phase is a mixture of two or more compounds having different chemical structures.

3. A composition according to Claim 1 or 2, wherein the liquid crystal compound having a crystal phase at a lower temperature side of ferroelectric chiral smectic C phase is at least one ferroelectric liquid crystal compound selected from compounds represented by the formulae:

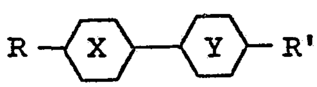 and 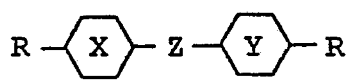

wherein R and R' are independently a substituent containing therein a branched or straight-chain alkyl group; 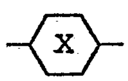 and 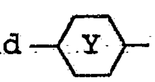 are independently a divalent six-membered ring group; and Z is a divalent linkage group.

4. A composition according to Claim 3, wherein the ferroelectric liquid crystal compound has a fundamental skelton of the formula: 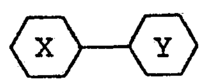 or 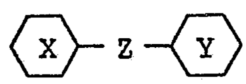, and at least two compounds having different fundamental skeltons are contained in the composition.

5. A composition according to Claim 3 or 4, wherein the

fundamental skelton of the formula: 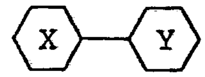 is a biphenyl ring.

6. A composition according to Claim 3 or 4, wherein the fundamental skelton of the formula: 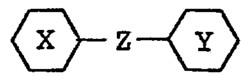 is a bezoic acid phenyl ester.

7. A composition according to any of Claims 3 to 6, wherein R and R' are independently an alkoxy group, an acyloxy group, an acyl group, an alkoxycarbonyl group or an alkyl group.

8. A composition according to any of claims 3 to 7, wherein the divalent six-membered ring group is a benzene ring, a cyclohexane ring, a biphenyl ring, a phenylcyclohexane ring, or a naphthalene ring; and Z is an ester group, a Schiff base group, an oxymethylene group or an ethylene group.

9. A composition according to Claim 4, wherein the ferroelectric liquid crystal having biphenyl ring is represented by the formula:

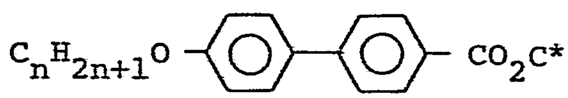

wherein n is an integer of 7 to 12; and C* is a branched alkyl chain having an asymmetric carbon.

0163229

10. A composition according to Claim 4, wherein the ferroelectric liquid crystal having benzoic acid phenyl ester ring is represented by the formula:

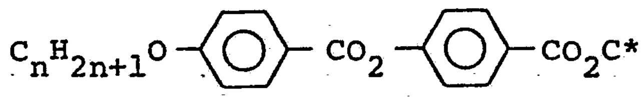

wherein n is an integer of 7 to 12; and C* is a branched alkyl chain having an asymmetric carbon.

11. A ferroelectric liquid crystal composition comprising one or more liquid crystal compounds showing a crystal phase at a lower temperature side of ferroelectric chiral smectic C phase when cooled, and the temperature range showing the ferroelectric chiral smectic C phase including room temperature (20°C).

FIG. 1

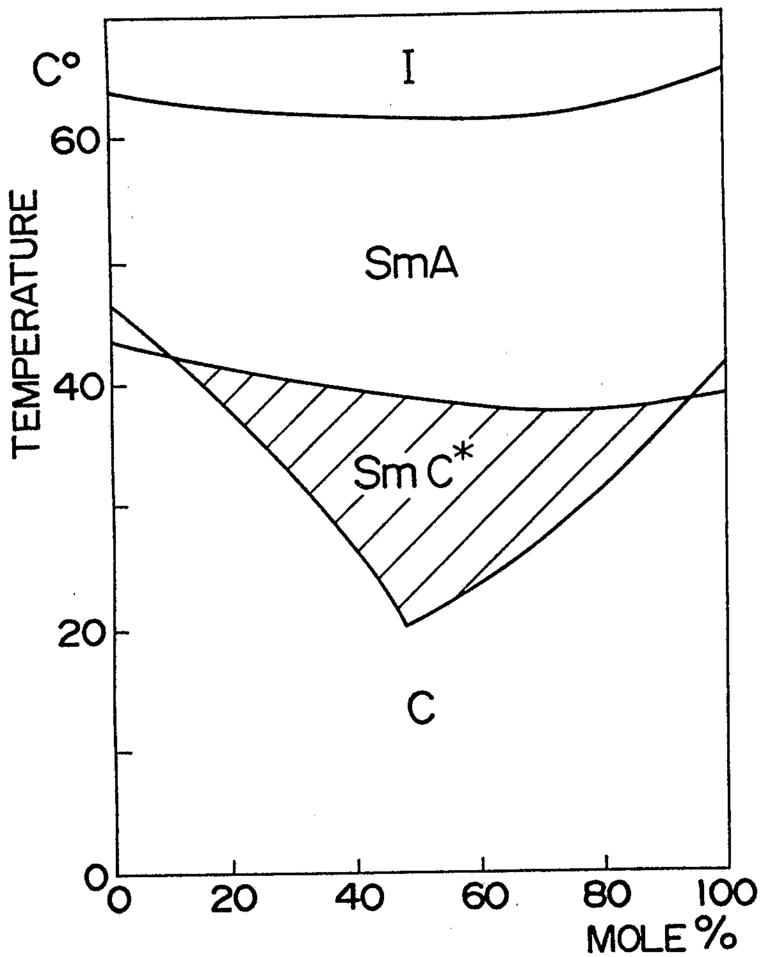
C°
60
40
20
0
TEMPERATURE
I
SmA
Sm C*
C
0
20
40
60
80
100
MOLE %

FIG. 2

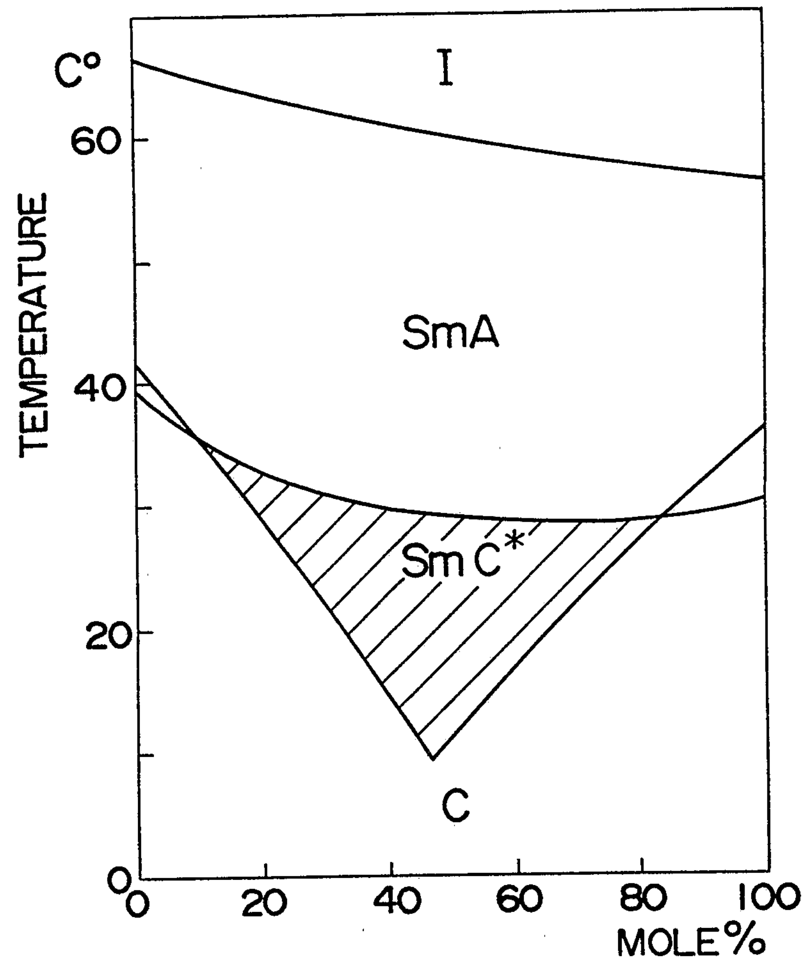
C°
60
40
20
0
TEMPERATURE
I
SmA
Sm C*
C
0
20
40
60
80
100
MOLE %

FIG.3

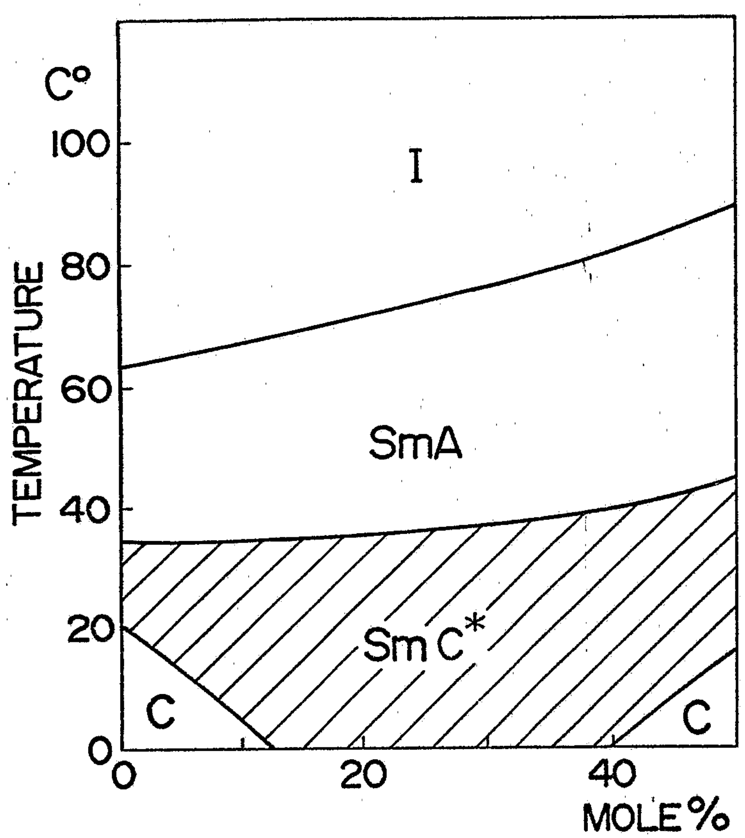
C°
100
80
60
40
20
0
TEMPERATURE
I
SmA
Sm C*
C
C
0
20
40
MOLE%

FIG.4

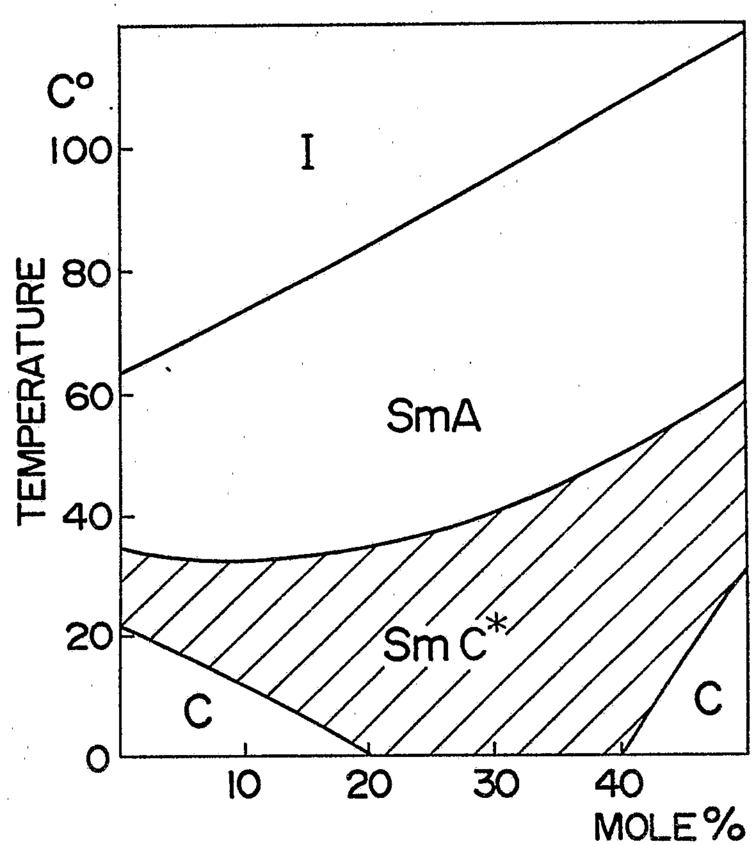
C°
100
80
60
40
20
0
TEMPERATURE
I
SmA
Sm C*
C
C
10
20
30
40
MOLE%

FIG. 5

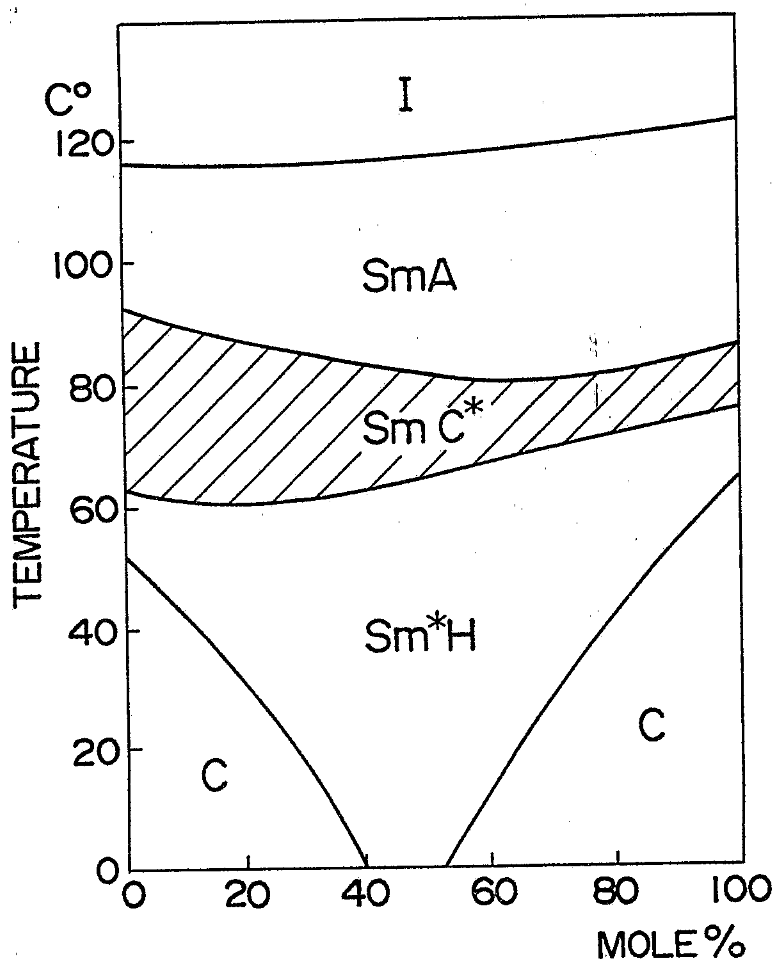
C°
120
100
80
60
40
20
0
TEMPERATURE
I
SmA
Sm C*
Sm*H
C
C
0
20
40
60
80
100
MOLE %

FIG. 6

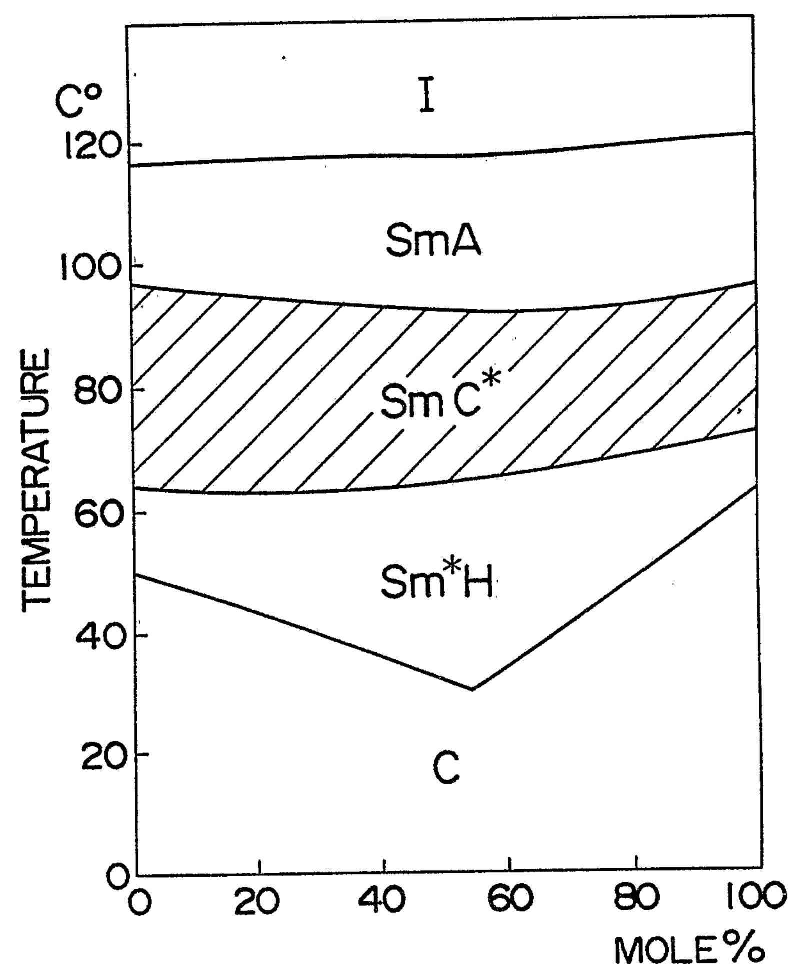
C°
120
100
80
60
40
20
0
TEMPERATURE
I
SmA
Sm C*
Sm*H
C
0
20
40
60
80
100
MOLE %

FIG. 7

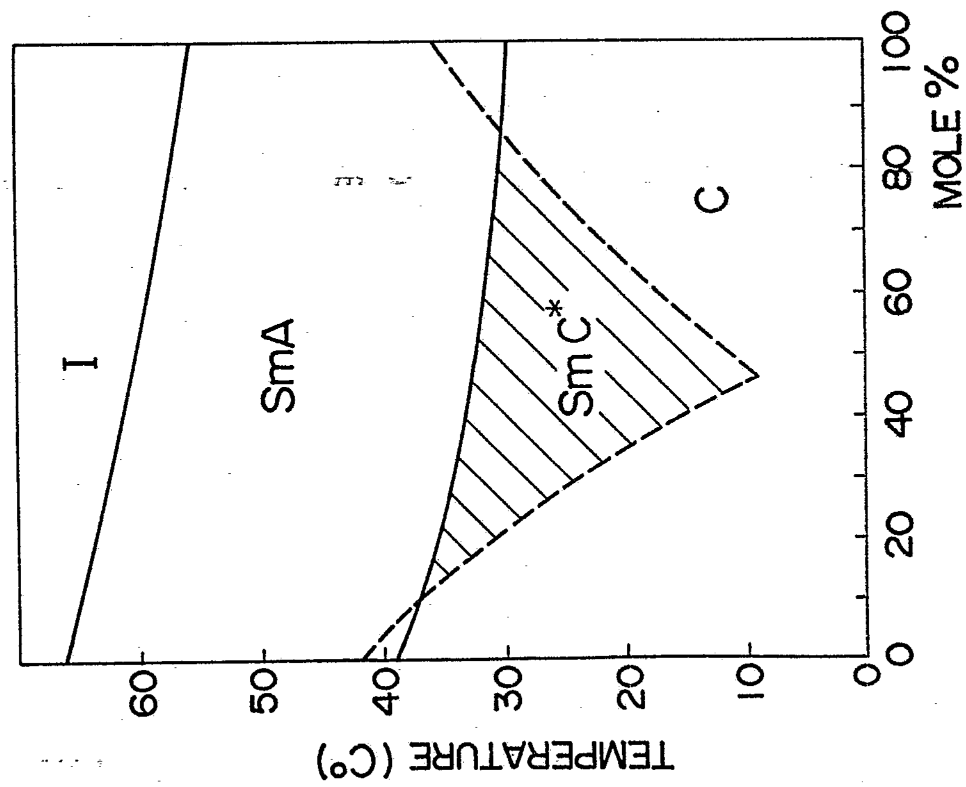
I
SmA
SmC*
C
TEMPERATURE (C°)
0
10
20
30
40
50
60
MOLE %
0
20
40
60
80
100

FIG. 8

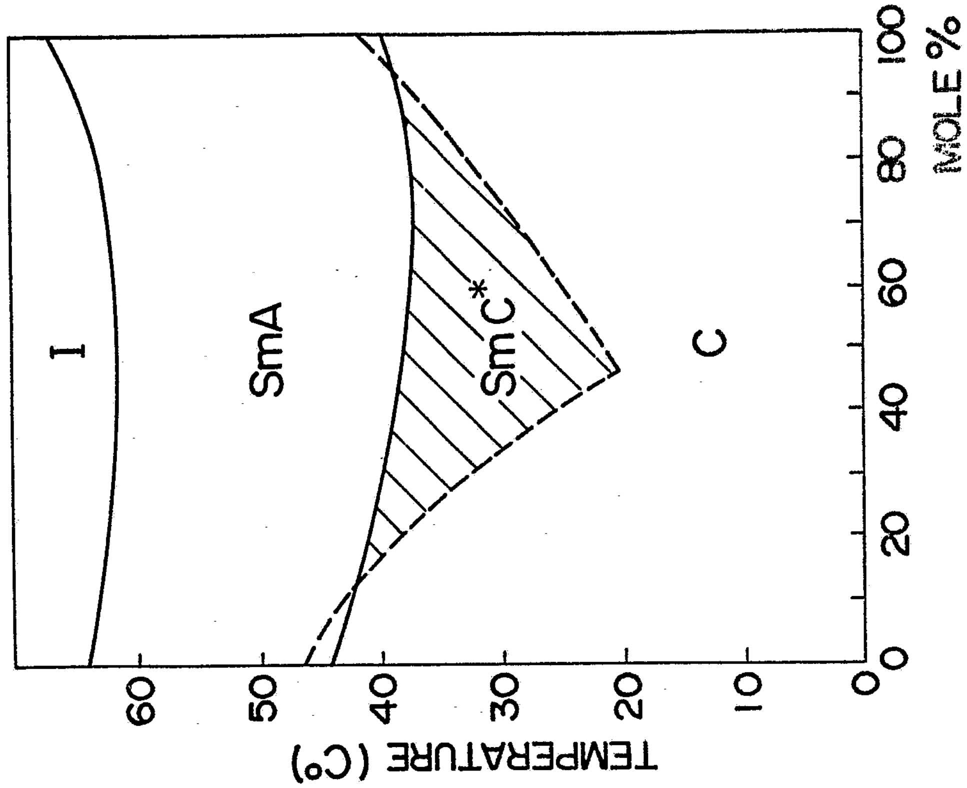
I
SmA
SmC*
C
TEMPERATURE (C°)
0
10
20
30
40
50
60
MOLE %
0
20
40
60
80
100

FIG. 9

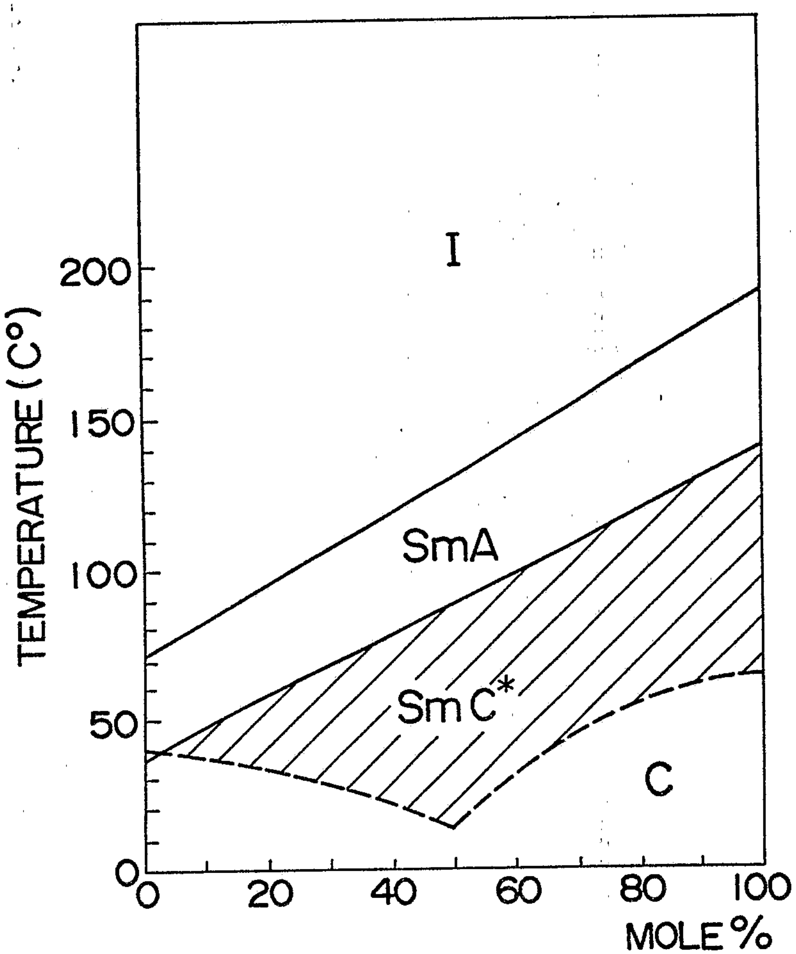
I
SmA
Sm C*
C
200
150
100
50
0
0
20
40
60
80
100
TEMPERATURE (C°)
MOLE %

FIG. 10

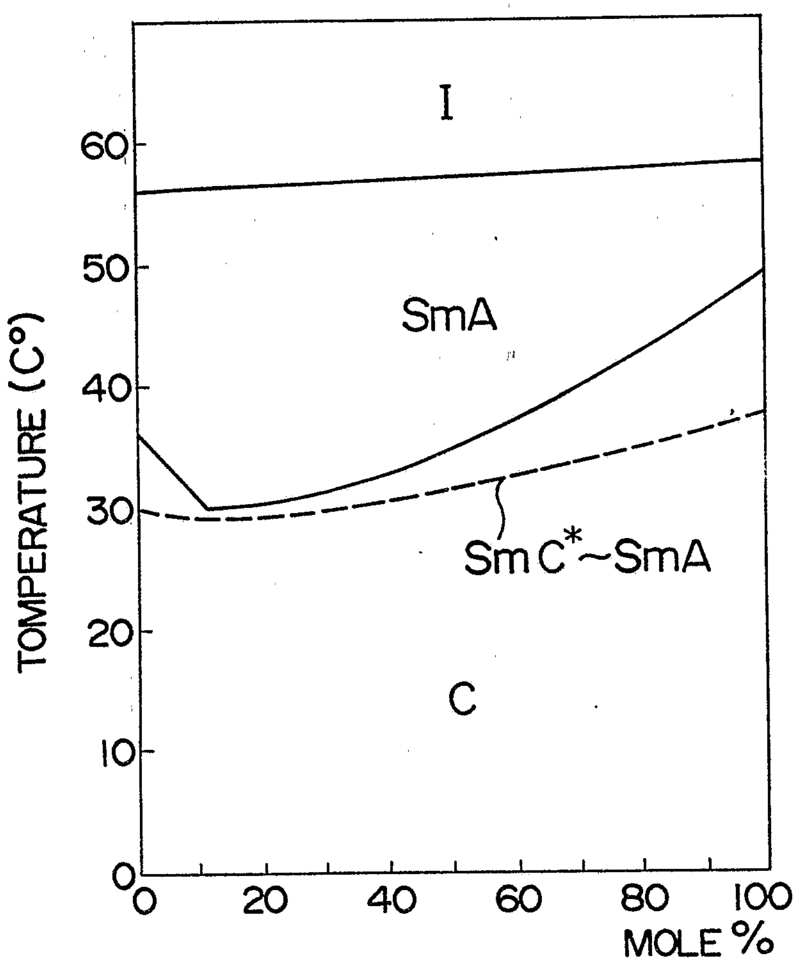
I
SmA
Sm C*~SmA
C
60
50
40
30
20
10
0
0
20
40
60
80
100
TOMPERATURE (C°)
MOLE %

FIG. 11

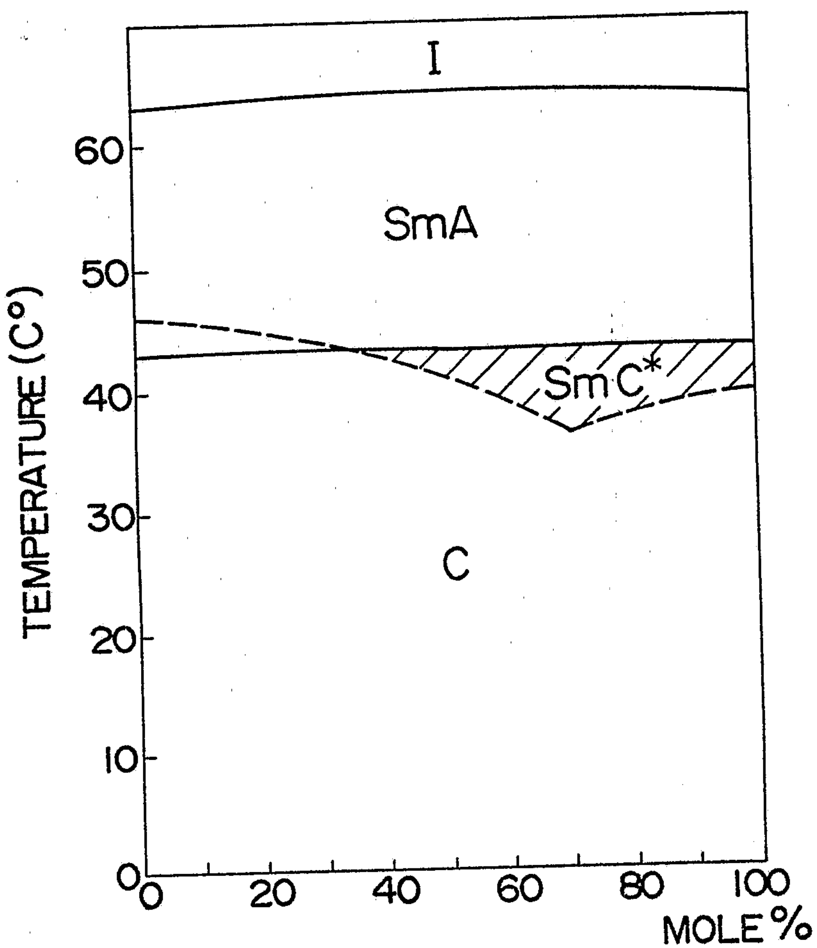

I
SmA
SmC*
C
TEMPERATURE (C°)
0
10
20
30
40
50
60
0
20
40
60
80
100
MOLE %


FIG. 12

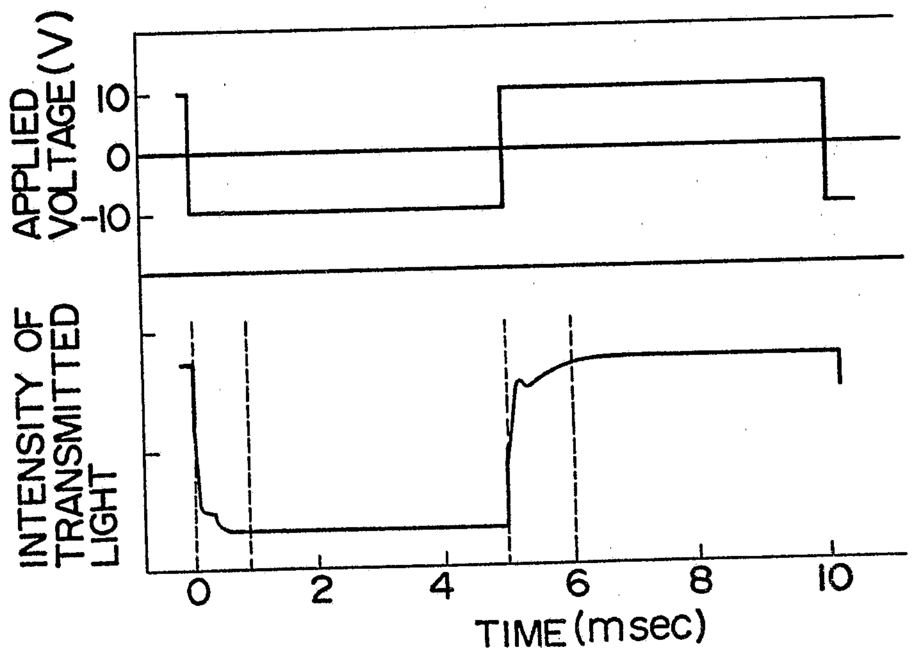

APPLIED VOLTAGE (V)
10
0
-10
INTENSITY OF TRANSMITTED LIGHT
0
2
4
6
8
10
TIME (msec)